# EUROPEAN PATENT APPLICATION

(11) **EP 1 775 617 A1**
(43) Date of publication of application: **18.04.2007**
(21) Application number: 05762016.3
(22) Date of filing: 20.07.2005
(51) Int. Cl.: G02B 7/28, G02B 7/36, G02B 21/26, H04N 5/232

(54) **AUTOFOCUS DEVICE AND MICROSCOPE USING THE SAME**

(30) Priority: 28.07.2004 JP 2004220718
(71) Applicant: HAMAMATSU PHOTONICS K.K., Hamamatsu-shi, Shizuoka-ken 435-8558 (JP)
(72) Inventor: Uchiyama, Shigeru, Hamamatsu Photonics K.K., Shizuoka 4358558 (JP); Inoue, Takayuki, Hamamatsu Photonics K.K., Shizuoka 4358558 (JP); Okugawa, Masatoshi, Hamamatsu Photonics K.K., Shizuoka 4358558 (JP)
(74) Representative: Frost, Alex John
(86) International application number: PCT/JP2005/013299
(87) International publication number: WO 2006/018946

(57) **Abstract**

A microscope apparatus 1A is formed with a CCD camera 30 that acquires an image of a sample S, a light guiding optical system 20 that guides an optical image of the sample S to the camera 30, an optical system driving section 25 that drives the camera 30 and the optical system 20 to change a focal position on the sample S in a z-axis direction, and a control device 50 that includes a focal point control section 51. The focal point control section 51 calculates a first focal point measurement value from a plurality of images acquired by a first focal point measurement that is executed while continuously changing the focal position in one direction, calculates a second focal point measurement value from a plurality of images acquired by a second focal point measurement that is executed while continuously changing the focal position in a direction opposite that of the first focal point measurement, and determines an in-focus position for the sample S based on the first and second focal point measurement values. This realizes an automatic focusing device that is capable of accurately determining an in-focus position in a short time and a microscope apparatus using the same.

## Description

### Technical Field

The present invention relates to an automatic focusing device for controlling a focal point when acquiring an image of a sample and a microscope apparatus using the automatic focusing device.

### Background Art

When an image of a sample is acquired by use of a microscope, out-of-focus owing to a tilt of the optical system or mechanical system in an apparatus or a tilt or an uneven shape of the sample itself becomes a problem. To cope therewith, conventionally, automatic focusing (autofocus) has been carried out in a microscope apparatus for automatically controlling a focal point of imaging by an image pickup device such as a CCD camera. A device that carries out such automatic focusing includes, for example, a device described in Patent Document 1.
Patent Document 1: Japanese Patent Application Laid-Open No. H05-288981

### Disclosure of the Invention

### Problems to be Solved by the Invention

In the above-described Document 1, disclosed is a method for acquiring a sample image at every fixed changing interval while continuously changing a focal position between an objective lens of a microscope and a sample to be an observation target of the microscope and determining an in-focus position based on a plurality of acquired images. However, in such a method, since a device such as a stepping motor or a piezo actuator is used for driving respective portions of the microscope so as to change the focal position, a delay unique to the device occurs when continuously changing the focal position. Therefore, when an in-focus position is determined by a focal point measurement using the above-described method, there is a problem in occurrence of an error caused by a delay in a change of the focal position.

On the other hand, as a method for eliminating influence of such a delay in a change of the focal position, there is a method which can be used of stopping the device at every fixed changing interval when changing the focal position and repeating acquiring a sample image after the focal position has been stabilized. However, by this method, stabilization of the focal position must wait at every time of image acquisition when acquiring a plurality of images necessary for determining the in-focus position. Therefore, there is a problem such that a very long time is necessary for determining the in-focus position.

The present invention has been made to solve the above problems, and an object thereof is to provide an automatic focusing device that is capable of accurately determining an in-focus position in a short time and a microscope apparatus using the same.

### Means for Solving the Problems

In order to achieve this object, an automatic focusing device according to the present invention includes: (1) image pickup means that acquires an image by an optical image of a sample to be an observation target; (2) a light guiding optical system that includes an objective lens into which light from the sample is made incident and guides the optical image of the sample to the image pickup means; (3) focal point changing means that changes a focal position on the sample for the image pickup means and the light guiding optical system in an optical axis direction; and (4) focal point control means that acquires, by use of the image pickup means and the focal point changing means, focus information when acquiring an image of the sample, wherein (5) the focal point control means calculates a first focal point measurement value from a plurality of images of the sample acquired by a first focal point measurement that is executed while continuously changing the focal position in one direction by the focal point changing means, calculates a second focal point measurement value from a plurality of images of the sample acquired by a second focal point measurement that is executed while continuously changing the focal position in a direction opposite that of the first focal point measurement, and determines an in-focus position for the sample based on the first focal point measurement value and the second focal point measurement value.

In the above-described automatic focusing device, an in-focus position is determined by use of a focal point measurement method for acquiring a plurality of images of the sample while continuously changing the focal position, not by stopping a change in the focal position at every fixed changing interval. Thereby, it becomes possible to acquire focus information for an observation position of the sample in a short time. Furthermore, with regard to the focal point measurement for determining an in-focus position, two times of focal point measurement are carried out in different focal position changing directions, and an in-focus position is determined with reference to focal point measurement values calculated in each thereof. At this time, for the two times of focal point measurement, influence of a delay in a change of the focal position is in opposite directions. Consequently, by using the focal point measurement values each calculated from a plurality of images for the two times of focal point measurement, it becomes possible to accurately determine a final in-focus position.

A microscope apparatus according to the present invention includes the above-described automatic focusing device and image acquisition control means that controls acquisition of an image of the sample based on the focus information including the in-focus position determined for an observation position of the sample by the focal point control means.

In the above-described microscope apparatus, a microscope apparatus is formed with the above-described automatic focusing device that carries out two times of focal point measurement in different focal position changing directions and determines an in-focus position for an observation position of the sample with reference to focal point measurement values calculated in each thereof. Thereby, it becomes possible to accurately determine an in-focus position when acquiring an image of a sample in a short time so as to efficiently execute observation of the sample with a high accuracy.

### Effects of the Invention

According to the automatic focusing device and the microscope apparatus using the same of the present invention, with regard to the focal point measurement for determining an in-focus position, by acquiring a plurality of images of a sample while continuously changing the focal position, carrying out two times of focal point measurement in different focal position changing directions, and determining an in-focus position with reference to focal point measurement values calculated in each thereof, it becomes possible to accurately determine an in-focus position for an observation position of the sample in a short time.

### Brief Description of the Drawings

[FIG 1] Fig. 1 is a block diagram showing a configuration of an embodiment of a microscope apparatus using an automatic focusing device.
[FIG. 2] Fig. 2 is a graph concerning an in-focus position determined by a one-directional focal point measurement.
[FIG 3] Fig. 3 is a graph concerning an in-focus position determined by a two-directional focal point measurement.
[FIG 4] Fig. 4 is a graph showing a delay in a change of focal position in a focal point measurement.
[FIG 5] Fig. 5 is a schematic view showing an example of a focus information acquiring method for the entire observation target region of a sample.
[FIG 6] Fig. 6 is a schematic view showing another example of a focus information acquiring method for the entire observation target region of a sample.
[FIG. 7] Fig. 7 is a graph showing a change in a straightness error relative to a stage feed position.
[FIG. 8] Fig. 8 is a graph showing a change in a straightness error relative to a stage feed position.

### Description of the Symbols

1A - microscope apparatus, 10 - sample stage, 15 - stage driving section, 20 - light guiding optical system, 21 - objective lens, 25 - optical system driving section, 30 - CCD camera (image pickup device), 50 - control device, 51 - focal point control section, 52 - image acquisition control section, 55 - focus information storing section, 58 - input device, 59 - display device.

### Best Modes for Carrying Out the Invention

Hereinafter, preferred embodiments of an automatic focusing device and a microscope apparatus using the same according to the present invention will be described in detail with reference to the accompanying drawings. Here, in the description of the drawings, identical elements are designated with identical numerical symbols so as to avoid overlapping descriptions. Dimensional ratios of the drawings are not always coincident with those in the description.

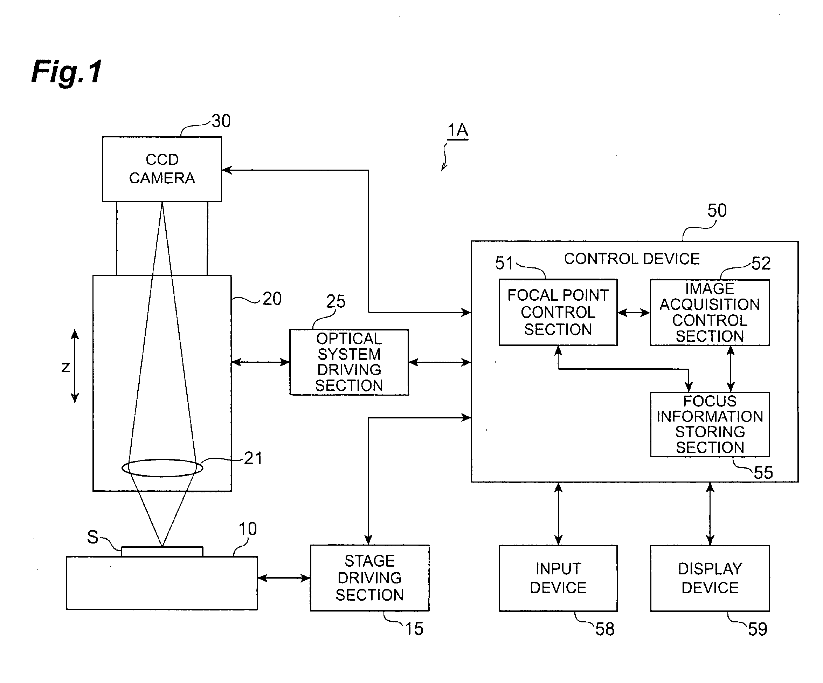

Fig. 1 is a block diagram showing a configuration of an embodiment of a microscope apparatus using an automatic focusing device according to the present invention. This microscope apparatus 1A is used for acquiring an image of a sample S. Here, the vertical direction to be an optical axis direction in the microscope apparatus 1A is provided as a z-axis direction, and the horizontal direction being a direction perpendicular to the optical axis is set as an x-axis direction and a y-axis direction. In addition, the sample S to be an observation target of the present microscope apparatus 1A is, for example, a biological sample, which is placed on a sample stage 10.

The sample stage 10 is formed of an XY stage movable in the x-direction and y-direction (horizontal direction), and by driving this XY stage 10 in an xy plane, an observation position in the microscope apparatus 1A to the sample S is set or changed. In addition, the sample stage 10 is drive-controlled by an XY stage driving section 15. In this configuration, the XY stage driving section 15 functions as observation position changing means that changes an observation position on the sample S for the microscope apparatus 1A in the direction perpendicular to the optical axis.

For the sample S on the sample stage 10, a light guiding optical system 20 for guiding an optical image of the sample S is provided above the stage 10. This light guiding optical system 20 includes an objective lens 21 into which light from the sample S is made incident and optical components necessary for guiding and converging an optical image of the sample S. Moreover, at a predetermined position on an optical path along which an optical image of the sample S is guided by the light guiding optical system 20, a CCD camera 30 being an imaging device is installed. This CCD camera 30 is image pickup means that acquires an image by an optical image of a sample S. The light guiding optical system 20 and the CCD camera 30 are integrally fixed with their optical axes, a distance between the optical system 20 and the camera 30, and the like having been adjusted.

Moreover, for the light guiding optical system 20 and the CCD camera 30, an optical system driving section 25 is installed. The optical system driving section 25 is constructed with use of, for example, a stepping motor or a piezo actuator, and shifts the optical system 20 and the camera 30 fixed to the optical system 20 in the z-axis direction being the optical axis direction. In this configuration, the optical system driving section 25 functions as focal point changing means that changes the focal position on the sample S for the CCD camera 30 and the light guiding optical system 20 in the optical axis direction. This optical system driving section 45 is used for controlling a focal point in the acquisition of an image of the sample S.

For the sample stage 10, the light guiding optical system 20, and the CCD camera 30, a control device 50 having a focal point control section 51 and an image acquisition control section 52 is installed. The focal point control section 51 acquires focus information including an in-focus position concerning acquisition of an image of the sample S, by use of the CCD camera 30 and the optical system driving section 25.

In the microscope apparatus 1A shown in Fig. 1, an automatic focusing device for acquiring focus information used when acquiring an image of the sample S is formed by the sample stage 10, the light guiding optical system 20, the CCD camera 30 being image pickup means, the stage driving section 15 being observation position changing means, the optical system driving section 25 being focal point changing means, and the focal point control section 51 of the control device 50 described above. In addition, the focus information acquired by the focal point control section 51 is stored in a focus information storing section 55.

The image acquisition control section 52 controls acquisition of an image of the sample S based on focus information including an in-focus position determined for the observation position on the sample S by the focal point control section 51 when actually executing image acquisition of the sample S by use of the CCD camera 30. In the configuration shown in Fig. 1, the image acquisition control section 52 controls a sample S image acquiring operation by the CCD camera 30, a focal point changing operation by the optical system driving section 25, and an observation position changing operation by the stage driving section 15 with reference to the focus information including an in-focus position read out of the focus information storing section 55, and executes observation and image acquisition of the sample S under desired observing conditions.

The control device 50 having the focal point control section 51 and the image acquisition control section 52 is composed of, for example, a computer including a CPU and necessary storage such as a memory and a hard disk. Moreover, to the control device 50, an input device 58 and a display device 59 are connected. The input device 58 is composed of, for example, a keyboard, a mouse, and the like connected to a computer and is used for input and the like of information and instructions necessary for executing a focus information acquiring operation by the focal point control section 51 in the present microscope apparatus 1A or an image acquiring operation by the image acquisition control section 52. Moreover, the display device 59 is composed of, for example, a CRT display, a liquid crystal display, or the like connected to a computer and is used for displaying necessary information with regard to focus information acquisition and image acquisition in the present microscope apparatus 1A.

Next, a focus information acquiring method in the automatic focusing device and the microscope apparatus 1A shown in Fig. 1 will be described.

In the microscope apparatus 1A of the present embodiment, acquisition of focus information including an in-focus position concerning image acquisition of the sample S is carried out by the focal point control section 51 of the control device 50 as described above. The focal point control section 51 executes a focus information acquisition for image acquisition of the sample S by use of the CCD camera 30 being image pickup means, the optical system driving section 25 being focal point changing means, and, if necessary, the stage driving section 15 being observation position changing means.

The focal point control section 51 drives the CCD camera 30 and the light guiding optical system 20 in the z-axis direction being the optical axis direction by the optical system driving section 25 so as to continuously change the focal position on the sample S in one direction along the z-axis direction. And, during the continuous change of the focal position, it carries out a focal point measurement to acquire an image of the sample S at every predetermined changing interval and carries out an analysis for a plurality of acquired images, so as to calculate a focal point measurement value indicating an in-focus position where a focal point of image acquisition by the CCD camera 30 and the light guiding optical system 20 comes into focus.

A changing range of the focal position to execute a focal point measurement is appropriately set so that the in-focus position is included in the changing range. In addition, for calculation of the focal point measurement value using a plurality of images acquired by the CCD camera 30 throughout the set changing range of the focal position, used is, for example, a method for evaluating a change in image characteristics such as high-low in contrast and high-low in brightness between a plurality of images and calculating, based on the evaluation results, a position where the focal point of image acquisition is most in focus as a focal point measurement value.

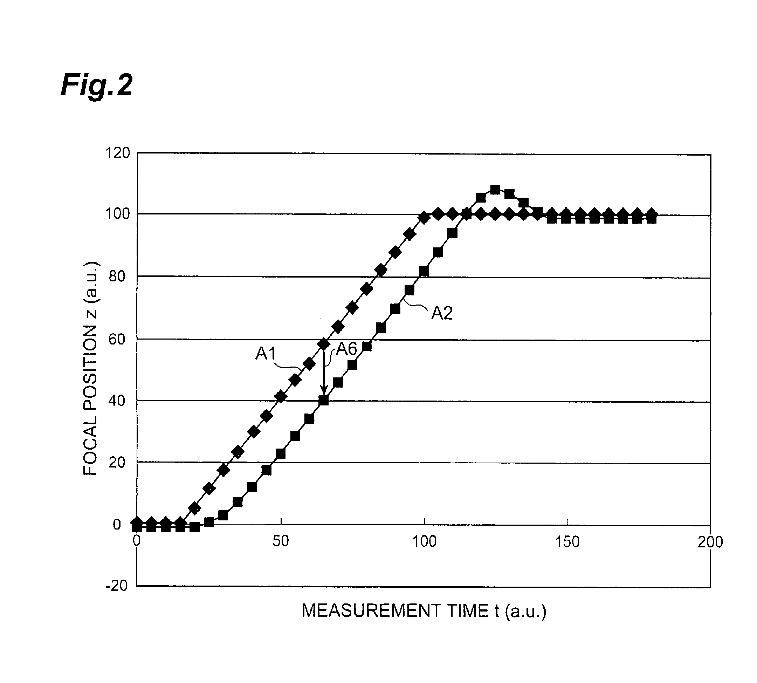

Fig. 2 is a graph concerning an in-focus position determined by a one-directional focal point measurement. In this graph, the horizontal axis indicates a measurement time t of a focal point measurement executed while continuously changing a focal position z on the sample S, and the vertical axis indicates the focal position z. Moreover, in Fig. 2, graph A1 shows focal positions on which the focal point control section 51 instructs the optical system driving section 25, and graph A2 shows actual focal positions set by the optical system driving section 25.

As can be understood from this graph, when the focal position is continuously changed by the optical system driving section 25 using a device such as a stepping motor or a piezo actuator, a delay in a change shown by an arrow A6 occurs in an actual change in the focal position shown in graph A2 in relation to an instructed change in the focal position shown in graph A1. Therefore, when a focal point measurement value is calculated from a plurality of images acquired by the above-described focal point measurement, an error caused by a delay in a change of the focal position occurs in the calculated focal point measurement value.

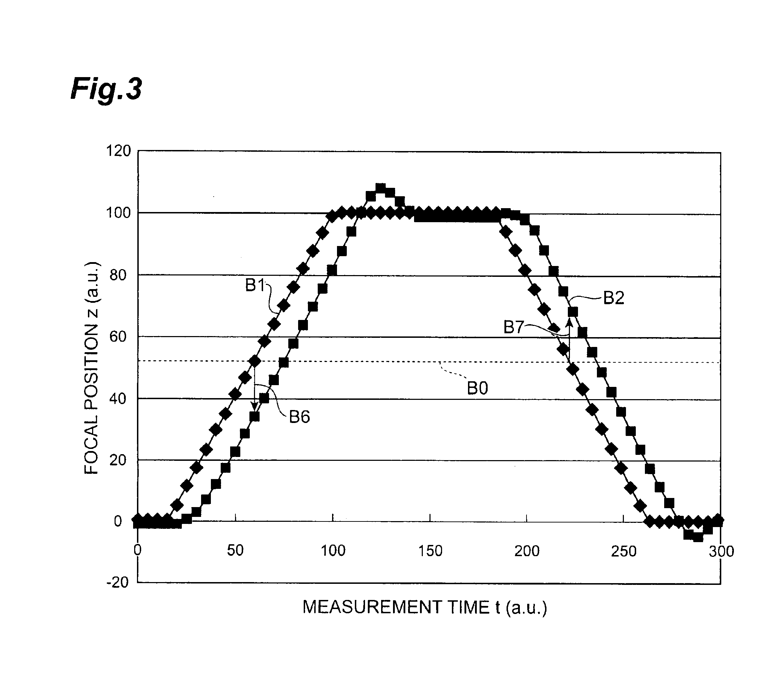

In the automatic focusing device and the microscope apparatus 1A shown in Fig. 1, in order to reduce such an error in the focal point measurement value, a two-directional focal point measurement is executed so as to determine an in-focus position. Fig. 3 is a graph concerning an in-focus position determined by a two-directional focal point measurement. In Fig. 3, the graph B1 shows focal positions on which the focal point control section 51 instructs the optical system driving section 25, and the graph B2 shows actual focal positions set by the optical system driving section 25.

Specifically, the focal point control section 51 executes a first focal point measurement while continuously changing the focal position on the sample S in one direction along the z-axis direction. And, it calculates a first focal point measurement value from images of the sample S acquired at every predetermined changing interval during that time. At this time, the first focal point measurement value to be obtained has, as shown by an arrow B6 in Fig. 3, an error caused by a delay in a change of the focal position.

The focal point control section 51 further executes a second focal point measurement while continuously changing the focal position on the sample S in a direction opposite that for the first focal point measurement along the z-axis direction. And, it calculates a second focal point measurement value from images of the sample S acquired at every predetermined changing interval during that time. At this time, the second focal point measurement value to be obtained has, as shown by an arrow B7 in Fig. 3, an error in a direction opposite that of the first focal point measurement value caused by a delay in a change of the focal position. In the focal point control section 51, as shown by a dashed line B0 in Fig. 3, an in-focus position for the sample S is determined by a mean value of the first focal point measurement value and the second focal point measurement value.

Effects of the automatic focusing device and the microscope apparatus according to the above-described embodiment will be described.

In the automatic focusing device shown in Fig. 1, an in-focus position is determined by use of a focal point measurement method of acquiring a plurality of images of the sample S by the CCD camera 30 while continuously changing the focal position by the optical system driving section 25, not by stopping a change in the focal position on the sample S at every fixed changing interval. Thereby, it becomes possible to acquire focus information for an observation position of the sample S in a short time.

Furthermore, with regard to the focal point measurement executed while continuously changing the focal position as described above, two times of focal point measurement are carried out in different focal position changing directions in the optical axis direction, and an in-focus position is determined with reference to focal point measurement values calculated in each thereof. At this time, in the two times of focal point measurement, as shown by the arrows B6 and B7 in Fig. 3, the error in the focal point measurement value due to influence of a delay in a change of the focal position is in opposite directions. Consequently, by using the first and second focal point measurement values calculated from a plurality of images in each of the first and second focal point measurements, it becomes possible to accurately determine a final in-focus position. In addition, the microscope apparatus 1A using such an automatic focusing device makes it possible to accurately determine the in-focus position when acquiring an image of the sample S in a short time so as to efficiently execute observation of the sample S with a high degree of accuracy.

Effects of the automatic focusing device and the microscope apparatus 1A will be described in detail. When a piezo element or the like is used for the optical system driving section 25, a delay in a focal position changing operation due to the same is on the order of a few tens to a hundred ms (milliseconds) when it is large. Whereas, when a frame rate to load images by the CCD camera 30 is provided as 30Hz and acquisition of an image of the sample S is carried out while continuously changing the focal position, with a delay in the changing operation of 100ms, the focal position instructed by the focal point control section 51 and the actual focal position set by the optical system driving section 25 are shifted from each other by three images in terms of the number of images. Such an image shift further increases when an image pickup device having a high frame rate is used. By the above-described device configuration and focus information acquiring method, by carrying out a two-directional focal point measurement, an influence of such an image shift is eliminated.

In addition, by using such a focus information acquiring method, acquisition of focus information can be speedily carried out. For example, it is assumed to carry out a focal point measurement by stopping a change in the focal position on the sample S at every fixed changing interval. In this case, where a delay in the changing operation is provided as 100ms, and a time until the focal position that has been changed is stabilized, as 300ms, which is three times as long as the delay, and a frame rate of image acquisition, as 30Hz (image acquiring time 1/30s), and the number of acquired images used for a focal point measurement, as 30, a time required for the focal point measurement is (image acquiring time + focal position stabilizing time) × number of acquired images = (1/30+0.3) × 30 = 10 seconds.

On the other hand, in the above-described method for carrying out a two-directional focal point measurement while continuously changing the focal position, where a frame rate of image acquisition is similarly provided as 30Hz, and the number of acquired images used for a focal point measurement, as 30 in one direction, a time required for the two-directional focal point measurement is 2 seconds. As such, by the automatic focusing device and microscope apparatus with the above-described configuration, it is possible to considerably reduce the time required for acquiring focus information.

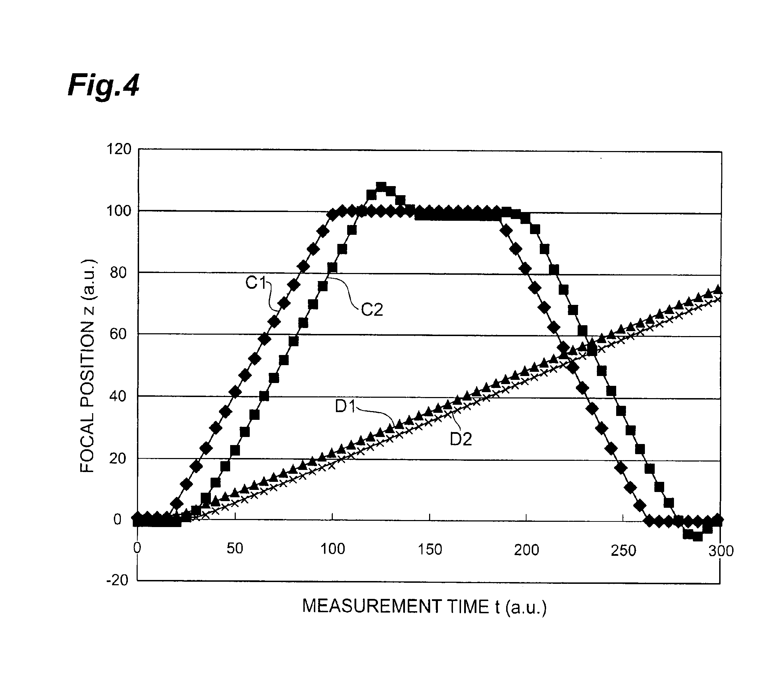

Here, the delay in a change of the focal position in a focal point measurement and the error in the focal point measurement value due to influence thereof change in size depending on a focal position changing speed. Fig. 4 is a graph showing a delay in a change of focal position in a focal point measurement. In Fig. 4, graph C 1 shows focal positions instructed by the focal point control section 51 so as to be a predetermined changing speed, and graph C2 shows actual focal positions set by the optical system driving section 25. In addition, graph D1 shows focal positions instructed by the focal point control section 51 so as to be a changing speed slower than the changing speed in graph C1, and graph D2 shows actual focal positions set by the optical system driving section 25.

As can be understood from these graphs, a delay in a change of the focal position between graphs D1 and D2 when a slow changing speed is set is smaller than a delay in a change between graphs C1 and C2 when a fast changing speed is set. Namely, the delay in a change of the focal position in a focal point measurement and the error that occurs in the focal point measurement value differ depending on specific conditions of the focal point measurement such as a focal position changing speed. Moreover, such a difference in errors also occurs due to, for example, the type of a device used for the optical system driving section 25, individual characteristics, or a change in device characteristics over time and the like. Whereas, in the above-described focus information acquiring method, since a method for canceling out influences of delays in a change of the focal position by executing two times of focal point measurement is used, irrespective of such uncertainty of the error, it is possible to reliably determine the in-focus position.

Here, with regard to the two times of focal point measurement, it is preferable to carry out the focal point measurements while providing identical conditions other than the focal position changing direction, for example, the changing range, changing interval, and the like of the focal position. Alternatively, the conditions other than the focal position changing direction can also be set to different conditions. Moreover, with regard to the changing interval of the focal position on the sample S in the first focal point measurement and the second focal point measurement, it is preferable to acquire an image of the sample S at every focal position changing interval set equal to or lower than a depth of field so as to acquire a plurality of images used for calculation of a focal point measurement value.

By setting the focal position changing interval as such for a focal point measurement, an in-focus position for the observation position on the sample S can be determined with a sufficiently high accuracy. Although the depth of field of the microscope apparatus 1A differs depending on a numerical aperture NA of the objective lens 21 used in the light guiding optical system 20, this is, for example, on the order of 1.5µm when NA=0.4, and when NA=0.7, on the order of 0.5µm. For a specific setting of a focal position changing interval, a method for, for example, setting the changing interval with a resolution half as much as the depth of field can be used. Alternatively, the focal position changing interval may be set greater than the depth of field according to a required focal position accuracy.

For derivation of the in-focus position using the first focal point measurement value and the second focal point measured value, it is preferable, as described above, to determine the in-focus position by a mean value of the first and second focal point measurement values. In the first and second focal point measurements where the focal position changing direction is opposite each other, delays in a change of the focal position are usually opposite in direction and approximately equal in size. Therefore, by providing a mean value of the first and second focal point measurement values as an in-focus position as described above, the in-focus position where influences of delays in a change of the focal position have been canceled out can be easily and reliably determined. Moreover, as such an in-focus position deriving method, a method other than the method for providing a mean value as an in-focus position may be used according to a specific focal point measurement method, characteristics of a device used for changing the focal position, and the like.

Moreover, as the image pickup means that acquires an image of the sample S, the identical CCD camera 30 has been used for acquisition of focus information by the focal point control section 51 and acquisition of an image of the sample S by the image acquisition control section 52 in the configuration shown in Fig. 1, however, a configuration using separate image pickup devices for each thereof may be employed. In this case, there is a configuration which can be used where two optical paths of a focal point controlling optical path and an image acquiring optical path are set in the light guiding optical system 20 and an image pickup device for focal point control and an image pickup device for image acquisition are installed on the respective optical paths. Alternatively, a configuration where an image pickup device for focal point control and an image pickup device for image acquisition are installed by switching on a single optical path may be provided.

Generally, it is preferable, as an image pickup device for focal point control, to use an image sensor such as a CCD camera that is capable of acquiring a two-dimensional image of the sample S. In addition, as an image pickup device for image acquisition, a linear sensor capable of acquiring a one-dimensional image of the sample S or an image sensor capable of acquiring a two-dimensional image can be used. For example, when acquiring an image while scanning a certain range of an observation target region of the sample S, it is preferable to use, as an image pickup device for image acquisition, a linear sensor (line sensor) or a two-dimensional image sensor capable of a TDI operation. Moreover, in the configuration shown in Fig. 1, a CCD camera capable of both a normal two-dimensional image acquiring operation and a TDI line sensor operation may be used as the CCD camera 30.

The focus information acquiring method in the automatic focusing device and the microscope apparatus 1A shown in Fig. 1 will be further explained.

In the microscope apparatus 1A of Fig. 1, an XY stage movable in an xy plane is used as the sample stage 10, and the XY stage driving section 15 is provided for this stage 10. By using such sample stage 10 and XY stage driving section 15, the observation position for the sample S can be adjusted in the xy plane. Alternatively, when, for the sample S, acquisition of an image is carried out with regard to a certain range of an observation target region, it is possible to change the observation position on the sample S in the direction perpendicular to the optical axis in the xy plane by the XY stage driving section 15.

When acquisition of an image of the sample S is carried out for a certain observation target region as such, as a method for acquiring focus information for the entire observation target region, it is preferable to use a method of the focal point control section 51 sectioning the observation target region of the sample S into a plurality of focal point measurement regions, determining an in-focus position for each of the plurality of focal point measurement regions, and carrying out mapping of the in-focus position for the observation target region by these in-focus positions.

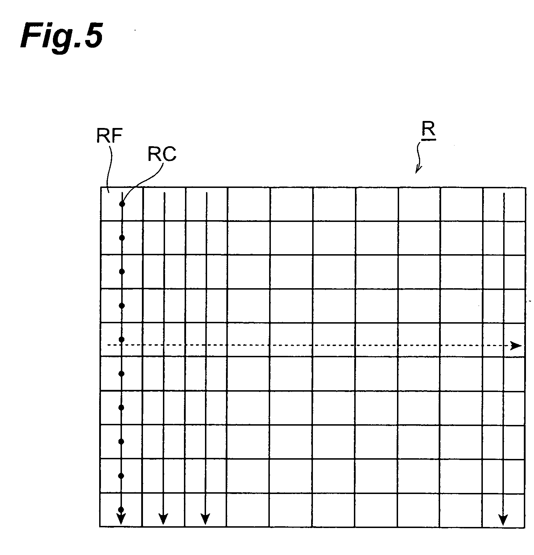

Fig. 5 is a schematic view showing an example of a focus information acquiring method for the entire observation target region of a sample. When acquiring image data while scanning the sample S across a wide range by use of the microscope apparatus 1A, a change in the focal position in the observation target region due to a tilt of the sample stage 10, a shape of the sample S, or the like becomes a problem. With a narrow observation target region, a change in the focal position does not become a problem even when image acquisition of the sample S is carried out at a plurality of observation positions, however, when image acquisition of the sample S is carried out across a wider range such as in an example of using a range of 20mm × 20mm as an observation target region, it is necessary to take into consideration a change in the focal position depending on the observation position.

In contrast thereto, by the focus information acquiring method shown in Fig. 5, as described above, an observation target region R is sectioned into a plurality of focal point measurement regions. In the example of Fig. 5, the rectangular observation target region R is sectioned into ten in the transverse direction and ten in the longitudinal direction so as to set 10×10 focal point measurement regions RF. And, by carrying out a focal point measurement for each of the 100 focal point measurement regions RF by the above-described method so as to determine an in-focus position, mapping data of in-focus positions for the entire observation target region R can be formed. By such a method, it is possible to efficiently acquire focus information such as in-focus positions for the observation target region R including a plurality of observation positions.

Here, with regard to sectioning conditions such as a number of sections of the observation target region R into focal point measurement regions RF, it is sufficient to appropriately set these according to a specific size of the observation target region R, a required focus information accuracy, and the like. Moreover, with regard to a focal point measurement and derivation of an in-focus position in each focal point measurement region RF, it is preferable to, for example, as shown in Fig. 5, set the center point of the focal point measurement region RF as an representative point RC and carry out a focal point measurement and derivation of an in-focus position while using this representative point RC as a measurement position.

When actually obtaining an image of the sample S by use of focus information acquired by such a method, it is sufficient for the image acquisition control section 52 to read out mapping data of focus information stored in the focus information storing section 55 and carry out scanning in the observation target region R while referring to the data so as to acquire an image of the sample S.

Fig. 5 simultaneously shows an example of such a method for acquiring an image of the sample S in the observation target region R. In this example, an image scan (solid line arrow) from the upper side to the lower side in the figure is repeatedly carried out from the left side to the right side (dashed line arrow) in the observation target region R so as to acquire the image of the sample S to the entire region R. In this case, by acquiring the image while adjusting the focal position so as to follow the image scan in the observation target region R with reference to the mapping data of focus information, a satisfactory image that is in focus can be acquired across the entire region R.

Alternatively, as a method for acquiring focus information for the entire observation target region of the sample S, it is preferable to use a method of the focal point control section 51 setting three or more focal point measurement positions in an observation target region of the sample S, determining an in-focus position for each of the three or more focal point measurement positions, and determining an in-focus position for each observation position in the observation target region by use of those in-focus positions.

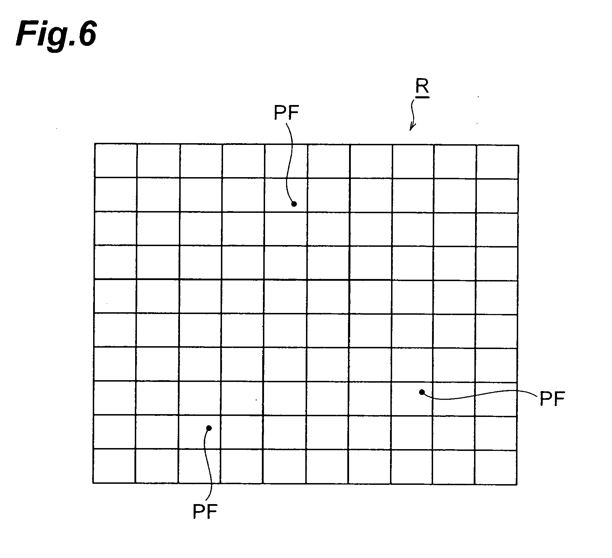

Fig. 6 is a schematic view showing another example of a focus information acquiring method for the entire observation target region of a sample. In the focus information acquiring method shown in Fig. 6, as described above, three focal point measurement positions PF are set for the observation target region R. And, a focal point measurement is carried out for each of the three focal point measurement positions PF by the method described above so as to determine an in-focus position. At this time, an in-focus position for an arbitrary observation position in the observation target region R can be determined by a linear interpolation based on the in-focus positions determined for the three focal point measurement positions PF. By such a method as well, it is possible to efficiently acquire focus information such as in-focus positions for the observation target region R.

Such a method is particularly effective when a change in the focal position is planar such as, for example, when the sample stage 10 is sufficiently planar in shape and a change in the focal position in the observation target region R is only due to a tilt of the stage 10. However, when three focal point measurement positions RF are used as shown in Fig. 6, it is necessary that the three points are not in alignment. Moreover, if four or more focal point measurement positions are set in the observation target region R and an in-focus position for an arbitrary observation position in the observation target region R is determined by a least squares method, the focal position can be controlled with a better accuracy.

In addition, as in the examples shown in Fig. 5 and Fig. 6, when acquisition of focus information is carried out for the observation target region R, it is preferable to simultaneously carry out a correction with regard to straightness of the sample stage 10. Generally, straightness of an XY stage is affected by eccentricity or the like of a ball screw used for moving the stage, straightness of a guide itself (for example, warpage of a rail along which the stage moves), flatness of a base part to which the guide is attached, waviness owing to a screw fixation for a guide attachment, vibration resulting from passage of rolling elements when the guide is a ball circulating type, and the like, so that the stage may not perform a linear motion.

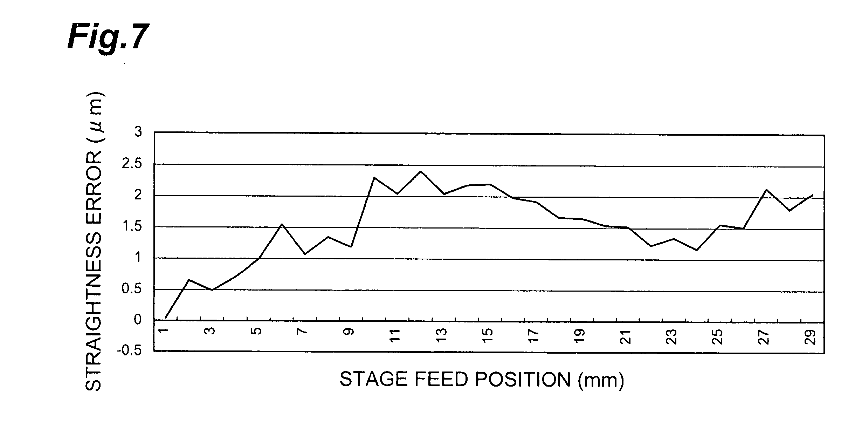

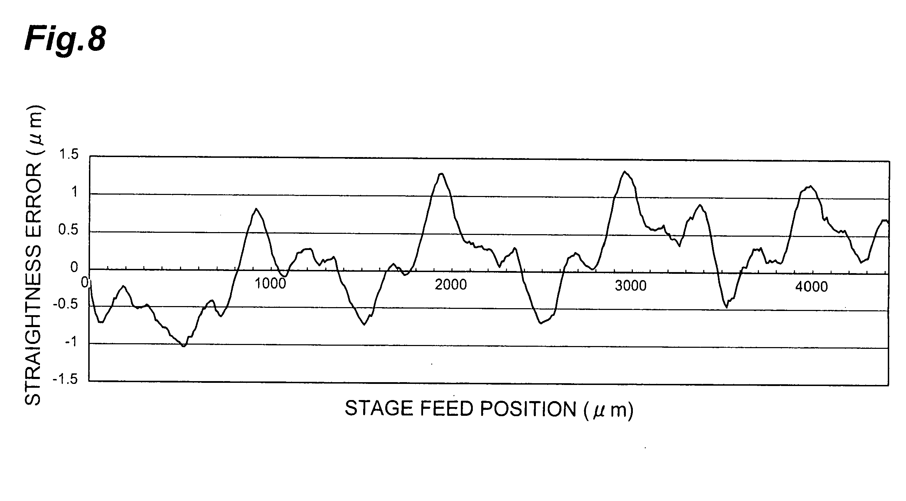

Fig. 7 and Fig. 8 are graphs each showing a change in a straightness error relative to a stage feed position. The graph of Fig. 7 shows a change in a straightness error for a wide feed position range. This corresponds mainly to an error pattern due to warpage of a rail along which the stage moves. In addition, the graph of Fig. 8 shows a change in a straightness error for a narrow feed position range. This corresponds mainly to an error pattern due to a feeding screw. For this, according to the above-described automatic focusing device and microscope apparatus 1A, it is possible to simultaneously correct such straightness of the stage by acquisition of focus information by a focal point measurement.

The automatic focusing device and microscope apparatus according to the present invention are not limited to the above-described embodiment and configuration examples, and can be variously modified. For example, for the focal point changing means that changes a focal position on the sample S for the image pickup means and the light guiding optical system in an optical axis direction, the optical system driving section 25 that drives the CCD camera 30 and the light guiding optical system 20 in the z-axis direction is used in the configuration shown in Fig. 1, however, another configuration such as, for example, driving the sample stage 10 on which the sample S has been placed in the z-axis direction may be used.

Moreover, for the observation position changing means that changes an observation position (imaging position) on the sample S in a direction perpendicular to the optical axis, the XY stage driving section 15 that drives the sample stage 10 in an xy plane is used in the configuration shown in Fig. 1, however, another configuration such as, for example, driving the CCD camera 30 and the light guiding optical system 20 in an xy plane may be used. Alternatively, such observation position changing means does not have to be provided if not necessary, such as when image acquisition is carried out at only one observation position for the sample S.

Here, it is preferable that the automatic focusing device includes: (1) image pickup means that acquires an image by an optical image of a sample to be an observation target; (2) a light guiding optical system that includes an objective lens into which light from the sample is made incident and guides the optical image of the sample to the imaging means; (3) focal point changing means that changes a focal position on the sample for the image pickup means and the light guiding optical system in an optical axis direction; and (4) focal point control means that acquires, by use of the image pickup means and the focal point changing means, focus information when acquiring an image of the sample, wherein (5) the focal point control means calculates a first focal point measurement value from a plurality of images of the sample acquired by a first focal point measurement that is executed while continuously changing the focal position in one direction by the focal point changing means, calculates a second focal point measurement value from a plurality of images of the sample acquired by a second focal point measurement that is executed while continuously changing the focal position in a direction opposite that of the first focal point measurement, and determines an in-focus position for the sample based on the first focal point measurement value and the second focal point measurement value.

In addition, it is preferable that the focal point control means determines the in-focus position by a mean value of the first focal point measurement value and the second focal point measurement value. In this case, an in-focus position where influences of delays in a change of the focal position have been canceled out can be reliably determined. Alternatively, as the method for determining an in-focus position, another method may be used according to a specific focal point measurement method.

In addition, it is preferable that the focal point control means carries out, in the first focal point measurement and the second focal point measurement, acquisition of a plurality of images of the sample at every changing interval of the focal position set equal to or lower than a depth of field. In this case, an in-focus position for an observation position of the sample can be determined with a sufficiently high accuracy.

In addition, it may be possible that the automatic focusing device includes observation position changing means that changes an observation position on the sample for the image pickup means and the light guiding optical system in a direction perpendicular to the optical axis, wherein the focal point control means sections an observation target region of the sample into a plurality of focal point measurement regions, and carries out mapping of the in-focus position for the observation target region by the in-focus positions determined respectively for the plurality of focal point measurement regions.

Alternatively, it may be possible that the automatic focusing device includes observation position changing means that changes an observation position on the sample for the image pickup means and the light guiding optical system in a direction perpendicular to the optical axis, wherein the focal point control means sets three or more focal point measurement positions in an observation target region of the sample, and determines the in-focus position for each observation position in the observation target region by use of the in-focus positions determined respectively for the three or more focal point measurement positions.

According to these configurations, when acquisition of images at a plurality of observation positions is carried out for a sample of an observation target, focus information such as in-focus positions for an observation target region including the plurality of observation positions can be efficiently acquired.

In addition, it is preferable that a microscope apparatus includes the above-described automatic focusing device and image acquisition control means that controls acquisition of an image of the sample based on the focus information including the in-focus position determined for an observation position of the sample by the focal point control means.

### Industrial Applicability

An automatic focusing device and a microscope apparatus according to the present invention can be utilized as an automatic focusing device that is capable of accurately determining an in-focus position in a short time and a microscope apparatus using the same.

## Claims

1. An automatic focusing device comprising:
image pickup means that acquires an image by an optical image of a sample to be an observation target;
a light guiding optical system that includes an objective lens into which light from the sample is made incident and guides the optical image of the sample to the image pickup means;
focal point changing means that changes a focal position on the sample for the image pickup means and the light guiding optical system in an optical axis direction; and
focal point control means that acquires, by use of the image pickup means and the focal point changing means, focus information when acquiring an image of the sample, wherein
the focal point control means calculates a first focal point measurement value from a plurality of images of the sample acquired by a first focal point measurement that is executed while continuously changing the focal position in one direction by the focal point changing means, calculates a second focal point measurement value from a plurality of images of the sample acquired by a second focal point measurement that is executed while continuously changing the focal position.in a direction opposite that of the first focal point measurement, and determines an in-focus position for the sample based on the first focal point measurement value and the second focal point measurement value.

2. The automatic focusing device according to Claim 1, wherein
the focal point control means determines the in-focus position by a mean value of the first focal point measurement value and the second focal point measurement value.

3. The automatic focusing device according to Claim 1 or 2, wherein
the focal point control means carries out, in the first focal point measurement and the second focal point measurement, acquisition of a plurality of images of the sample at every changing interval of the focal position set equal to or lower than a depth of field.

4. The automatic focusing device according to any one of Claims 1 to 3, comprising observation position changing means that changes an observation position on the sample for the image pickup means and the light guiding optical system in a direction perpendicular to the optical axis, wherein
the focal point control means sections an observation target region of the sample into a plurality of focal point measurement regions, and carries out mapping of the in-focus position for the observation target region by the in-focus positions determined respectively for the plurality of focal point measurement regions.

5. The automatic focusing device according to any one of Claims 1 to 3, comprising observation position changing means that changes an observation position on the sample for the image pickup means and the light guiding optical system in a direction perpendicular to the optical axis, wherein
the focal point control means sets three or more focal point measurement positions in an observation target region of the sample, and determines the in-focus position for each observation position in the observation target region by use of the in-focus positions determined respectively for the three or more focal point measurement positions.

6. A microscope apparatus comprising:
the automatic focusing device according to any one of Claims 1 to 5; and
image acquisition control means that controls acquisition of an image of the sample based on the focus information including the in-focus position determined for an observation position of the sample by the focal point control means.
